# EUROPÄISCHE PATENTSCHRIFT

(11) **EP 3 765 183 B1**
(45) Veröffentlichungstag und Bekanntmachung des Hinweises auf die Patenterteilung: **12.07.2023**
(21) Anmeldenummer: 19710382.3
(22) Anmeldetag: 08.03.2019
(51) Int. Cl.: B01F 29/83, B01F 35/45, B01F 35/75, F16H 25/18

(54) **VORRICHTUNG ZUR UMSETZUNG EINER LINEARBEWEGUNG IN EINEM STATIONÄREN SYSTEM IN EINE DREHBEWEGUNG UM EINE SCHWENKACHSE IN EINEM SICH UM EINE DREHACHSE DREHENDEN SYSTEM**
DEVICE FOR CONVERTING A LINEAR MOVEMENT IN A STATIONARY SYSTEM INTO A ROTATIONAL MOVEMENT ABOUT A PIVOT AXIS IN A SYSTEM WHICH ROTATES ABOUT A ROTATIONAL AXIS
DISPOSITIF SERVANT À TRANSFORMER UN DÉPLACEMENT LINÉAIRE DANS UN SYSTÈME STATIONNAIRE EN UN DÉPLACEMENT DE ROTATION AUTOUR D'UN AXE DE PIVOTEMENT DANS UN SYSTÈME TOURNANT AUTOUR D'UN AXE DE ROTATION

(30) Priorität: 16.03.2018 DE 102018106188
(43) Veröffentlichungstag der Anmeldung: 20.01.2021
(73) Patentinhaber: Maschinenfabrik Gustav Eirich GmbH & Co KG, 74736 Hardheim (DE)
(72) Erfinder: BLAU, Simon, 74746 Höpfingen (DE); SCHMITT, Clemens, 74731 Walldürn-Altheim (DE)
(74) Vertreter: WSL Patentanwälte Partnerschaft mbB
(86) Internationale Anmeldenummer: PCT/EP2019/055843
(87) Internationale Veröffentlichungsnummer: WO 2019/175049

(56) Entgegenhaltungen:
- WO-A1-2011/128435
- WO-A2-2012/076705
- US-A- 4 854 715
- US-A- 4 998 678

## Beschreibung

Die vorliegende Erfindung betrifft eine Vorrichtung zur Umsetzung einer Linearbewegung in einem stationären System in eine Drehbewegung um eine Schwenkachse in einem sich um eine Drehachse drehenden System.

Es gibt eine Vielzahl von Anwendungen, in welchen in einem sich drehenden System ein sich mitdrehendes Element eine Schwenkbewegung um eine Schwenkachse durchführen soll, wobei die Schwenkachse nicht auf der Drehachse und auch nicht parallel zu dieser verläuft. Um die Schwenkbewegung zu bewirken, ist ein entsprechender Antrieb notwendig. Dabei kann der Antrieb im drehenden System vorgesehen sein, so dass er sich mitdreht. Allerdings muss der Antrieb mit Energie versorgt werden und zudem benötigt er aufgrund der Anordnung im drehenden System entsprechend Platz. Insbesondere dann, wenn der Antrieb eine hohe Masse aufweist oder das drehende System mit hohen Drehzahlen um die Drehachse rotiert, sind unter Umständen noch Auswuchtelemente notwendig, um das Gewicht des Antriebes auszugleichen.

Eine beispielhafte Anwendung ist ein Mischer mit einem sich während des Mischprozesses drehenden Mischbehälters, in dem das Mischgut aufgenommen wird. Solche Mischer weisen häufig exzentrisch angeordnete Mischwerkzeuge auf, die selbst wieder im Betrieb gedreht werden können. Zum Entleeren des Mischers nach erfolgtem Mischvorgang kann in dem Boden des Mischbehälters ein Verschlussdeckel angeordnet sein. Ein solcher Mischer ist beispielsweise aus der WO 2011/128435 A1 bekannt.

Bei der dort gezeigten Ausführungsform ist der Verschlussdeckel über eine Lagergabel und einen Lagerzapfen mit einem Tragarm verbunden und kann somit um die Kippachse des Lagerzapfens verschwenkt werden. Bei solchen Mischern schließt der Verschlussdeckel häufig bündig mit dem Boden des Behälters ab, so dass eine ebene Bodenfläche gebildet wird, auf welcher das Mischgut bewegt wird. Dies stellt eine effiziente Durchmischung des gesamten Mischguts sicher, da sich oberhalb des Verschlussdeckels kein Totraum befindet, der durch das Mischwerkzeug nicht erreicht wird.

Die Anforderung des bündigen Abschlusses des Verschlussdeckels mit dem Behälterboden erschwert die Gestaltung und Führung des Verschlussdeckels.

Im Grunde genommen müsste der Verschlussdeckel zum Öffnen der Entleeröffnung zunächst linear nach unten bewegt werden. Dies hätte jedoch zur Folge, dass aufgrund der Anordnung der Entleeröffnung im Boden des Behälters das Mischgut über alle Kantenflächen des Verschlussdeckels strömen und gegebenenfalls sogar den Antrieb des Verschlussdeckels verschmutzen würde. Ein ausschließlich seitliches Herausschwenken des Verschlussdeckels aus der Entleeröffnung ist jedoch aufgrund der im Wesentlichen zylinderförmigen oder kegelstumpfförmigen Kontaktflächen von Verschlussdeckel und Entleeröffnung nicht möglich.

Aus diesem Grund erlaubt der Antrieb des Verschlussdeckels, der in der WO 2011/128435 A1 gezeigt ist, eine Verschwenkbewegung sowohl um die Schwenkwelle als auch um den Lagerzapfen. In der beschriebenen Ausführungsform ist der Tragarm im stationären System positioniert, während der Verschlussdeckel im in die Entleeröffnung eingesetzten Zustand sich zusammen mit dem Behälter dreht. Daher ist der Verschlussdeckel am Tragarm drehbar gelagert.

Grundsätzlich wäre es von Vorteil, wenn der Verschlussdeckel zum Öffnen oder Schließen lediglich um eine Schwenkachse geschwenkt werden muss. Um dennoch einen bündigen Abschluss im Boden des Behälters zur Verfügung zu stellen, müssten die Kantenflächen des Verschlusselementes derart gekrümmt ausgebildet sein, dass sie auf einer gedachten Kugel liegen, so dass das Verschlusselement zum Öffnen und Schließen der Entleeröffnung um eine Schwenkachse geschwenkt werden könnte, die durch den Mittelpunkt der gedachten Kugel verläuft.

In diesem Fall ist es jedoch nicht möglich, den Verschlussdeckel drehend gegenüber einem Tragarm auszuführen. Stattdessen müsste der Antrieb ins drehende System verlegt werden mit den oben beschriebenen Nachteilen. Daher ist der Verschlussdeckel bislang nicht in der beschriebenen Form verwirklicht worden.

In der WO 2012/076705 ist ein Luftfahrzeug mit rotierenden Flügeln beschrieben, bei dem ein Rotor einen Rotormast mit einer Längsachse zum Tragen der Flügel und eine Vorrichtung zum Steuern der Flügel aufweist.

Es ist daher Aufgabe der vorliegenden Erfindung, eine Vorrichtung zur Umsetzung einer Linearbewegung in einem stationären System in eine Drehbewegung um eine Schwenkachse in einem sich um eine Drehachse drehenden System zur Verfügung zu stellen. Zudem ist es Aufgabe der vorliegenden Erfindung, eine Mischvorrichtung der beschriebenen Art bereitzustellen, bei der der Verschlussdeckel um eine Schwenkachse verschwenkt werden kann, wobei der Antrieb hierfür im stationären System positioniert ist.

Erfindungsgemäß wird diese Aufgabe durch eine Umsetzvorrichtung gemäß Anspruch 1 gelöst, welche ein Hubelement, eine Hubvorrichtung, mit der das Hubelement translatorisch relativ zum stationären System bewegt werden kann, und eine Vorrichtung zur Umsetzung einer Linearbewegung in eine Drehbewegung aufweist. Dabei besitzt das Hubelement ein erstes Hubelementteil und ein zweites Hubelementteil, wobei die beiden Hubelementteile über ein Drehlager derart miteinander verbunden sind, dass das erste Hubelementteil relativ zu dem zweiten Hubelementteil um die Achse des Drehlagers gedreht werden kann, wobei die beiden Teile des Hubelementes in Richtung der translatorischen Bewegung der Hubvorrichtung formschlüssig miteinander verbunden sind, und das erste Hubelementteil mit der Hubvorrichtung verbunden ist, während das zweite Hubelementteil mit der Vorrichtung zur Umsetzung einer Linearbewegung in eine Drehbewegung verbunden ist, so dass die Vorrichtung zur Umsetzung einer Linearbewegung in eine Drehbewegung mit einer auf der Schwenkachse positionierten Welle derart verbunden ist, dass eine Linearbewegung des zweiten Hubelementteiles in eine Drehbewegung der Welle um die Schwenkachse umgesetzt wird.

Im stationären System ist somit eine Hubvorrichtung und ein Hubelement angeordnet. Mithilfe der Hubvorrichtung kann das Hubelement zwischen zwei Positionen, nämlich einer unteren Position und einer oberen Position linear hin und her bewegt werden. Die Bezeichnung "unten" und "oben" sind hier willkürlich gewählt. Grundsätzlich könnte die Bewegung der Hubvorrichtung statt in vertikaler Richtung auch in horizontaler Richtung oder in jeder anderen beliebigen Richtung erfolgen. Weiterhin ist vorgesehen, dass die Vorrichtung zur Umsetzung einer linearen Bewegung in eine Drehbewegung eine mit dem zweiten Hubelementteil verbundene Kurvenscheibe und einen mit der Kurvenscheibe in Kontakt stehenden Hebel, welcher mit einer auf der Schwenkachse angeordneten Welle verbunden ist, aufweist.

Es hat sich gezeigt, dass diese Lösung besonders praktikabel ist, auch wenn andere Vorrichtungen zur Umsetzung der translatorischen Bewegung in eine Drehbewegung, wie beispielsweise eine Zahnrad - Zahnstangenkombination, denkbar sind.

In einer bevorzugten Ausführungsform erfolgt die Bewegung der Hubvorrichtung parallel zur Drehachse des sich drehenden Systems.

Die Hubvorrichtung ist der Antrieb im stationären System, welcher lediglich das Hubelement zwischen zwei Positionen hin und her bewegen kann. Das Hubelement selbst besteht aus zwei Teilen, dem ersten Hubelementteil und dem zweiten Hubelementteil. Das erste Hubelementteil ist mit der Hubvorrichtung drehfest verbunden. Das zweite Hubelementteil ist wiederum über ein Drehlager mit dem ersten Hubelement Teil verbunden, so dass das zweite Hubelementteil relativ zu dem zweiten Hubelementteil um die Achse des Drehlagers gedreht werden kann. In einer bevorzugten Ausführungsform liegt die Drehlagerachse auf der Drehachse des drehenden Systems.

Der bisher beschriebene Aufbau hat zur Folge, dass das zweite Hubelementteil sich relativ zum ersten Hubelementteil um die Drehachse drehen kann, während gleichzeitig die Hubeinrichtung das erste Hubelement in Richtung der Drehachse hin und her bewegen kann.

Das zweite Hubelementteil ist nun mit der Vorrichtung zur Umsetzung einer Linearbewegung in eine Drehbewegung verbunden. Dadurch, dass das zweite Hubelementteil aufgrund der formschlüssigen Verbindung mit dem ersten Hubelementteil sich ebenfalls zusammen mit dem ersten Hubelementteil in Richtung der Drehachse hin und her bewegt, kommt es zu einer Linearbewegung des zweiten Hubelementteils. Die Vorrichtung zur Umsetzung einer Linearbewegung in eine Drehbewegung ist mit dem zweiten Hubelementteil verbunden und befindet sich damit im sich drehenden System. Eine auf der Schwenkachse positionierte Welle, die mit der Vorrichtung zur Umsetzung einer Linearbewegung in einer Drehbewegung verbunden ist, wird immer dann um die Schwenkachse gedreht, wenn die Hubvorrichtung eine Linearbewegung vollführt.

In einer bevorzugten Ausführungsform ist vorgesehen, dass die Hubvorrichtung mindestens einen, vorzugsweise mindestens vier Hubkolben aufweist, der das stationäre System mit dem ersten Hubelementteil verbindet und das erste Hubelementteil relativ zum stationären System linear bewegen kann.

In einer weiteren bevorzugten Ausführungsform ist das erste und/oder das zweite Hubelementteil ringförmig ausgebildet. Beispielsweise könnte das zweite Hubelementteil einen zylinderförmigen Auslaufkanal eines Mischbehälters umschließen und sich mit diesem um die Drehachse drehen.

In einer weiteren bevorzugten Ausführungsform ist eine weitere Vorrichtung zur Umsetzung einer Linearbewegung in eine Drehbewegung vorgesehen, welche mit dem zweiten Hubelementteil und einer zweiten auf der Schwenkachse angeordneten Welle verbunden ist. Dadurch kann die auf der Schwenkachse positionierte Welle zweiteilig ausgeführt sein, um beispielsweise den Öffnungsbereich, in welchem die Schwenkachse liegt, freizuhalten.

Hinsichtlich der Mischvorrichtung wird die eingangs genannte Aufgabe dadurch gelöst, dass eine Mischvorrichtung mit einem um eine Behälterachse drehbaren Behälter zur Aufnahme von Mischgut vorgesehen ist, in dessen Boden eine Entleeröffnung angeordnet ist. Die Mischvorrichtung weist einen Verschlussdeckel zum Verschließen der Entleeröffnung und einen Mischerfuß auf, wobei der Behälter relativ zum Mischerfuß drehbar ist. Erfindungsgemäß wird nun eine Umsetzvorrichtung wie gerade beschrieben verwendet, bei welcher der Mischerfuß Teil des stationären Systems ist und der Behälter Teil des sich drehenden Systems ist, wobei der Verschlussdeckel zum Öffnen und Verschließen der Entleeröffnung um eine Schwenkachse gedreht werden kann.

In einer besonders bevorzugten Ausführungsform der Mischvorrichtung weist diese zwei Vorrichtungen zur Umsetzung einer Linearbewegung in eine Drehbewegung auf, die beide mit dem zweiten Hubelementteil verbunden sind, wobei beide jeweils mit einer auf der Schwenkachse angeordneten Welle verbunden sind. Dadurch ist es nun möglich, dass der Verschlussdeckel aus zwei Verschlussdeckelteilen besteht, die relativ zueinander zwischen einer geschlossenen Position, in welcher sich die beiden Verschlussdeckelteile berühren und zusammen den Verschlussdeckel bilden, und einer geöffneten Position, in welche die beiden Verschlussdeckelteile voneinander beabstandet sind, so dass zwischen den beiden Verschlussdeckelteilen eine Öffnung zur Entnahme des Mischgutes aus dem Behälter gebildet wird, um eine Schwenkachse hin und her verschwenkt werden können, um sie zwischen der geschlossenen Positionen und der geöffneten Positionen hin und her zu bewegen. Dabei sind beide Verschlussdeckelteile um dieselbe Schwenkachse verschwenkbar, wobei der eine Verschlussdeckelteil mit der Vorrichtung zur Umsetzung einer Linearbewegung in eine Drehbewegung verbunden ist und der andere Verschlussdeckelteil mit der weiteren Vorrichtung zur Umsetzung einer Linearbewegung in eine Drehbewegung verbunden ist.

Mit Vorteil wiest die Mischvorrichtung ein im Innern des Behälters angeordnetes drehbares Mischwerkzeug auf. Das Verschlusselement kann eine Innenfläche, die bei geschlossener Entleeröffnung innerhalb des Behälters angeordnet ist, eine Außenfläche, die bei geschlossenen Entleeröffnung außerhalb des Behälters angeordnet ist, und eine Kantenfläche, die bei geschlossenen Entleeröffnung gegenüber einer Kantenfläche der Entleeröffnung angeordnet ist, aufweisen.

In einer bevorzugten Ausführungsform sind Verschlusselement, Entleeröffnung und Schwenkachse derart ausgebildet und angeordnet, dass ein am weitesten von der Schwenkachse entfernt angeordneter Punkt auf der Innenfläche oder der Kantenfläche des Verschlusselementes bei der Schwenkbewegung einen Kreis beschreibt, wobei das Verschlusselement innerhalb des Kreises und die Kantenflächen der Entleeröffnung außerhalb des Kreises angeordnet sind.

Durch diese Maßnahme muss das Verschlusselement nur um die Schwenkachse gedreht werden, um die Entleeröffnung zu verschließen. Die Entleeröffnung ist derart ausgebildet und angeordnet, dass die Kantenflächen der Entleeröffnung während des Schwenkvorgangs nicht mit dem Verschlusselement kollidieren können.

Grundsätzlich kann auch in der geschlossenen Position des Verschlusselementes innerhalb der Entleeröffnung ein Spalt zwischen den Kantenflächen des Verschlusselementes und den Kantenflächen der Entleeröffnung verbleiben. Die Spaltbreite sollte jedoch kleiner sein als die kleinste Korngröße des zu bearbeitenden Mischgutes, um ein Herausfließen des Mischgutes aus dem Mischbehälters in der geschlossenen Position des Verschlusselementes zu vermeiden.

In einer bevorzugten Ausführungsform ist vorgesehen, dass die Entleeröffnung und das Verschlusselement zueinander korrespondierende Kantenflächen aufweisen, die miteinander in Kontakt treten, wenn das Verschlusselement in der Entleeröffnung positioniert ist.

Durch diese Maßnahme wird sichergestellt, dass in der geschlossenen Position des Verschlusselementes kein Spalt zwischen Entleeröffnung und Verschlusselement verbleibt.

In einer weiteren bevorzugten Ausführungsform ist vorgesehen, dass die Kantenflächen des Verschlusselementes derart gekrümmt ausgebildet sind, dass sie auf einer gedachten Kugel liegen, und der Mittelpunkt der gedachten Kugel auf der Schwenkachse liegt.

Besonders bevorzugt schließt das Verschlusselement mit dem Boden bündig ab, so dass sich eine ebene Bodenfläche ergibt, wenn das Verschlusselement in der Entleeröffnung positioniert ist
Eine solche Ausbildung der Kantenflächen ähnelt dem Aufbau von Kugelsegmentschiebern. Kugelsegmentschieber dienen als Absperrorgan innerhalb von Dosier- und Zuführungsleitungen. Allerdings sind bei den Kugelsegmentschiebern die beweglichen Ventilschieber kugelsegmentförmig ausgebildet, d. h. nicht nur die Kontaktflächen, die mit einem entsprechenden Ventilsitz in Kontakt treten, sind gekrümmt ausgeführt, sondern der gesamte Ventilschieber hat die Form einer Kugelhaube. Abgesehen davon, dass ein solcher Ventilschieber nicht als Verschlussdeckel anzusehen ist, erlaubt er aufgrund der Haubenform auch keine ebene Anordnung im Behälterboden.

Die erfindungsgemäße Ausbildung hat den Vorteil, dass der Verschlussdeckel einfach um die Schwenkachse geschwenkt werden kann, um die Entleeröffnung zu schließen oder zu öffnen.

Weitere Vorteile, Merkmale und Anwendungsmöglichkeiten der vorliegenden Erfindung werden deutlich anhand der folgenden Beschreibung einer bevorzugten Ausführungsform und der zugehörigen Figuren.

Es zeigen:
Figur 1 einen seitlichen Schnitt durch einen Mischer mit Verschlussdeckel und Vorrichtung zum Betrieb des Verschlussdeckels gemäß der vorliegenden Erfindung,
Figur 2 eine Draufsicht auf den Verschlussbereich gemäß Figur 1,
Figur 3 eine zweite Draufsicht auf den Verschlussbereich gemäß Figur 1,
Figur 4 eine Schnittansicht des Verschlussbereiches der Figuren 1-3 mit einem mehrteiligen Verschlussdeckel.

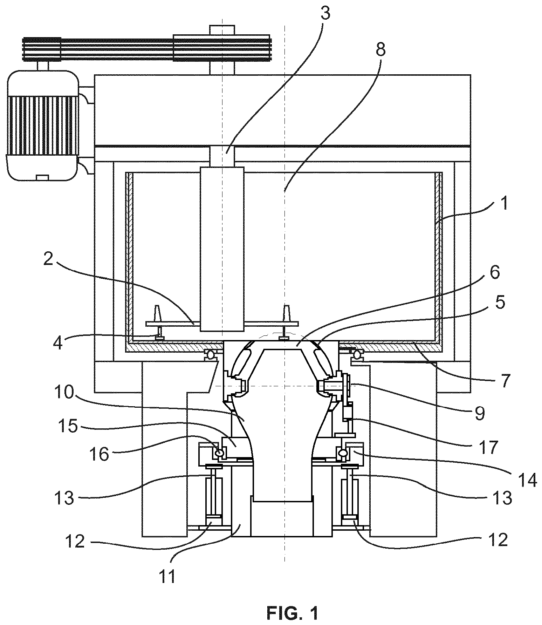

In Figur 1 ist ein Schnitt durch einen Mischer mit der erfindungsgemäßen Vorrichtung gezeigt. Der zylindrische Mischbehälter 1 weist ein exzentrisch im Mischbehälter angeordnetes, fliegend gelagertes Mischwerkzeug 2 an einer zentralen Mischerwelle 3 sowie einen stationären, vertikal von oben fliegend gehaltenen Wand-/Bodenabstreifer (nicht dargestellt) auf. An der untersten Ebene des Mischwerkzeugs 2 sind vertikal nach unten ragende Bodenmesser 4 befestigt, die mit einem geringen Abstand zur Oberfläche des Behälterbodens arbeiten.

Im Zentrum des Mischbehälters 1 befindet sich die Entleeröffnung 5. Die Entleeröffnung 5 kann mit dem als Verschlussdeckel 6 ausgebildeten Verschlusselement verschlossen werden. Zu erkennen ist zudem der Mischbehälterboden 7.

Der Behälterboden 7 dreht sich zusammen mit dem Behälter um eine Drehachse 8. Zum Öffnen und Schließen des Verschlussdeckels 6 wird der Verschlussdeckel 6 um die Schwenkachse 9 gedreht. Damit dies möglich ist, haben Entleeröffnung und die Verschlussdeckelteile zueinander korrespondierende Kantenflächen, die derart gekrümmt sind, dass sie auf einer gedachten Kugel liegen, so dass zum Öffnen oder Schließen der Entleeröffnung die Verschlusselementteile um eine Schwenkachse geschwenkt werden können, auf welcher der Mittelpunkt der gedachten Kugel liegt.

In der Regel befindet sich in dem oberhalb des Mischbehälterbodens 7 angeordneten Mischbehälter Mischgut, dass dann, wenn der Verschlussdeckel 6 geöffnet wird, durch die Entleeröffnung 5 in den Mischgutauslauf 10 fällt. Der Mischgutauslauf 10 ist mit dem Behälterboden verbunden, so dass dieser sich mit dem Behälter dreht. An den Mischgutauslauf 10 ist eine mit dem stationären System verbundene Schürze 11 angeordnet. Der Mischgutauslauf 10 und die Schürze 11 sind relativ zueinander über ein Drehlager 16 drehbar.

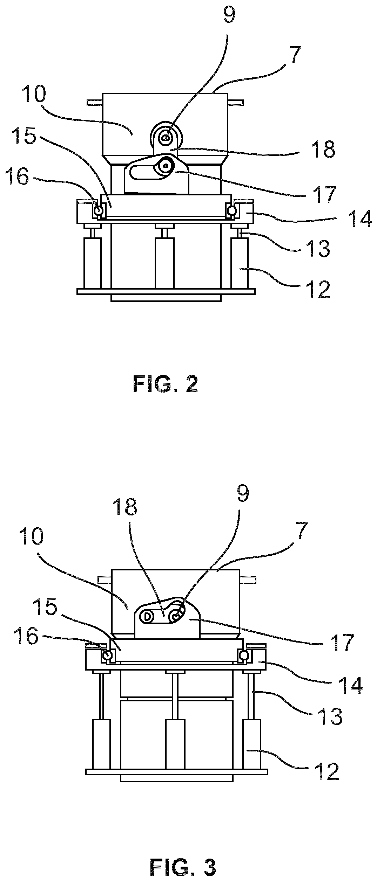

Ebenfalls mit dem stationären System verbunden, das heißt z.B. im Mischerfuß, in welchem der entsprechende Mischer positioniert ist, angeordnet, ist eine Hubvorrichtung 12, 13. In dem gezeigten Beispiel sind zwei Hubkolben in zwei entsprechenden Kammern innerhalb des Kolbengehäuses 12 angeordnet. In an sich bekannter Weise können die durch den Hubkolben 13 gebildeten Fluidkammern innerhalb des Kolbengehäuses 12 mit Druckfluid beaufschlagt werden, um den Hubkolben 13 innerhalb des Gehäuses 12 zwischen seinen beiden Extrempositionen, die beispielsweise in Figur 2 und 3 gezeigt sind, hin und her zu bewegen.

Der Hubkolben 13 ist mit einem ersten Hubelementteil 14 verbunden. Wird die Hubvorrichtung 12, 13 betätigt, kann das Hubelementteil 14 zusammen mit dem Hubkolben 13 nach oben bzw. unten bewegt werden. Das Hubelement besteht aus dem ersten Hubelement 14 und dem zweiten Hubelement 15. Die beiden Hubelementteile 14, 15 sind über ein Drehlager 16 relativ zueinander drehbar. Da das erste Hubelement 14 am Hubkolben 13 befestigt ist, ist dies im stationären System angeordnet, d.h. es dreht sich nicht zusammen mit dem Mischbehälter. Das zweite Hubelementteil 15 wiederum ist mit dem Mischgutauslauf 10 verbunden, so dass es sich zusammen mit diesem und dem Mischgutbehälter dreht, wenn der Behälter angetrieben wird. Das erste Hubelementteil und das zweite Hubelementteil sind derart angeordnet, dass sie in Richtung der Linearbewegung der Hubvorrichtung 12, 13 formschlüssig miteinander verbunden sind, was bedeutet, dass wenn das erste Hubelement 14 von der in Figur 2 gezeigten unteren Position in die in Figur 3 gezeigte obere Position bewegt wird, das zweite Hubelementteil 15 mit angehoben wird.

Wie insbesondere den Figuren 2 und 3 zu entnehmen ist, ist mit dem zweiten Hubelementteil 15 eine Kurvenscheibe 17 verbunden. Auf der Kurvenscheibe 17 läuft ein Hebel 18, der wiederum mit dem Mischbehälter bzw. dem Mischgutauslauf 10 über die Schwenkachse 9 verbunden ist. Wird nun die Hubvorrichtung betätigt, um das Hubelement von der in Figur 2 gezeigten unteren Position in die in Figur 3 gezeigte obere Position zu bringen, läuft der Hebel 18 auf der Kurvenscheibe 17 entlang und wird im Uhrzeigersinn um die Schwenkachse 9 gedreht. Da die auf der Schwenkachse 9 befindliche Schwenkwelle 19 mit einem Verschlussdeckel 6 verbunden ist, wird dieser ebenfalls um die Schwenkachse 9 gedreht.

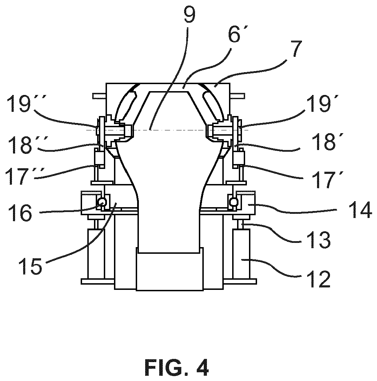

Figur 4 zeigt eine Schnittansicht des Verschlussbereiches der Figuren 1-3 mit einem mehrteiligen Verschlussdeckel. Das zweite Hubelementteil 15 weist in diesem Falle zwei Vorrichtungen 17', 17" und 18', 18" zur Umsetzung einer Linearbewegung in eine Drehbewegung auf, die beide mit dem zweiten Hubelementteil 15 verbunden sind. Gegenüberliegend sind Kurvenscheiben 17' und 17" mit dem zweiten Hubelementteil 15 verbunden. Die Kurvenscheiben 17' und 17" sind für eine gegenläufige Bewegung der Verschlussdeckelteile 6'und 6" (nicht dargestellt) bevorzugt identisch, d.h. nicht spiegelbildlich ausgeführt. In den Kurvenscheiben läuft jeweils ein entsprechender Hebel 18' und 18" wobei beide Hebel jeweils mit einer auf der Schwenkachse angeordneten Schwenkwelle 19'und 19" verbunden sind, die wiederum jeweils mit dem der Schwenkwelle zugeordneten Verschlussdeckelteil 6' bzw. 6" verbunden sind. Dadurch ist es nun möglich, dass der Verschlussdeckel aus zwei Verschlussdeckelteilen 6' und 6" besteht, die relativ zueinander zwischen einer geschlossenen Position und einer geöffneten Position um eine Schwenkachse hin und her verschwenkt werden können, um sie zwischen der geschlossenen Position und der geöffneten Position hin und her zu bewegen. Dabei sind beide Verschlussdeckelteile um dieselbe Schwenkachse 9 verschwenkbar, wobei das eine Verschlussdeckelteil 6'mit der Vorrichtung 17', 18', 19' zur Umsetzung einer Linearbewegung in eine Drehbewegung verbunden ist und der andere Verschlussdeckelteil 6" mit der weiteren Vorrichtung 17", 18", 19" zur Umsetzung einer Linearbewegung in eine Drehbewegung verbunden ist. Bei Verwendung identischer Kurvenscheiben 17' und 17" schwenkt dann die eine Schwenkwelle 19' im Uhrzeigersinn, während die auf der gleichen Schwenkachse 9 liegende zweite Schwenkwelle 19" im Gegenuhrzeigersinn bewegt wird.

Durch die beschriebene Umsetzvorrichtung kann in einfacher Weise aus einem stationären System mithilfe einer translatorischen Bewegung eine Schwenkbewegung innerhalb eines sich drehenden Systems erzeugt werden.

### Bezugszeichenliste:

- 1: Mischbehälter
- 2: Mischwerkzeug
- 3: Mischerwelle
- 4: Bodenmesser
- 5: Entleeröffnung
- 6: Verschlussdeckel
- 6', 6: Verschlussdeckelteil
- 7: Mischbehälterboden
- 8: Drehachse
- 9: Schwenkachse
- 10: Mischgutauslauf
- 11: Schürze
- 12: Kolbengehäuse
- 13: Hubvorrichtung
- 14: erstes Hubelement
- 15: zweites Hubelement
- 16: Drehlager
- 17: Kurvenscheibe
- 18: Hebel
- 19, 19', 19": Schwenkwelle

## Patentansprüche

1. Vorrichtung zur Umsetzung einer Linearbewegung in einem stationären System in eine Drehbewegung um eine Schwenkachse (9) in einem sich um eine Drehachse (8) drehenden System, wobei Schwenkachse (9) und Drehachse (8) nicht identisch und nicht parallel zueinander verlaufen, wobei vorzugsweise Schwenkachse (9) und Drehachse (8) senkrecht zueinander verlaufen, mit einem Hubelement, einer Hubvorrichtung (13), mit der das Hubelement translatorisch relativ zum stationären System bewegt werden kann, und einer Vorrichtung zur Umsetzung einer Linearbewegung in eine Drehbewegung, wobei das Hubelement ein erstes Hubelementteil (14) und ein zweites Hubelementteil (15) aufweist, wobei die beiden Hubelementteile (14, 15) über ein Drehlager (16) derart miteinander verbunden sind, dass das erste Hubelementteil (14) relativ zu dem zweiten Hubelementteil (15) um die Achse des Drehlagers (16) gedreht werden kann, wobei die beiden Teile des Hubelementes in Richtung der translatorischen Bewegung der Hubvorrichtung (13) formschlüssig miteinander verbunden sind, wobei das erste Hubelementteil (14) mit der Hubvorrichtung (13) verbunden ist und das zweite Hubelementteil (15) mit der Vorrichtung zur Umsetzung einer Linearbewegung in eine Drehbewegung verbunden ist, wobei die Vorrichtung zur Umsetzung einer Linearbewegung in eine Drehbewegung mit einer auf der Schwenkachse (9) positionierten Welle (19) derart verbunden ist, dass eine Linearbewegung des zweiten Hubelementteiles (15) in eine Drehbewegung der Welle um die Schwenkachse (9) umgesetzt wird, **dadurch gekennzeichnet, dass** die Vorrichtung zur Umsetzung einer linearen Bewegung in eine Drehbewegung eine mit dem zweiten Hubelementteil (15) verbundene Kurvenscheibe (17) und einen mit der Kurvenscheibe (17) in kontaktstehendem Hebel (18), welcher mit der Welle (3) verbunden ist, aufweist.

2. Umsetzvorrichtung nach Anspruch 1, **dadurch gekennzeichnet, dass** die Hubvorrichtung (13) mindestens einen, vorzugsweise mindestens vier Hubkolben aufweist, der das stationäre System mit dem ersten Hubelementteil (14) verbindet und das erste Hubelementteil (14) relativ zum stationären System linear bewegen kann.

3. Umsetzvorrichtung nach Anspruch 1 oder 2, **dadurch gekennzeichnet, dass** das erste und/oder das zweite Hubelementteil ringförmig ausgebildet ist.

4. Umsetzvorrichtung nach einem der Ansprüche 1-3, **dadurch gekennzeichnet, dass** eine weitere Vorrichtung zur Umsetzung einer Linearbewegung in eine Drehbewegung vorgesehen ist, welche mit dem zweiten Hubelementteil (15) und einer zweiten auf der Schwenkachse (9) angeordneten Welle verbunden ist.

5. Umsetzvorrichtung nach Anspruch 4, **dadurch gekennzeichnet, dass** die beiden Vorrichtungen zur Umsetzung einer Linearbewegung in eine Drehbewegung derart ausgebildet sind, dass die beiden auf der Schwenkachse (9) angeordneten Wellen gegenläufig zueinander bewegt werden.

6. Mischvorrichtung mit einem um eine Behälterachse drehbaren Behälter zur Aufnahme von Mischgut, in dessen Boden (7) eine Entleeröffnung (5) angeordnet ist, einem Verschlussdeckel (6) zum Verschließen der Entleeröffnung (5) und einem Mischerfuß, wobei der Behälter relativ zum Mischerfuß drehbar ist, **dadurch gekennzeichnet, dass** eine Umsetzvorrichtung nach einem der Ansprüche 1-5 vorgesehen ist, bei welcher der Mischerfuß Teil des stationären Systems ist und der Behälter Teil des sich drehenden Systems ist, wobei der Verschlussdeckel (6) zum Öffnen und Verschließen der Entleeröffnung (5) um eine Schwenkachse (9) gedreht werden kann.

7. Mischvorrichtung nach Anspruch 6, **dadurch gekennzeichnet, dass** eine Umsetzvorrichtung nach Anspruch 4 und 5 vorgesehen ist, der Verschlussdeckel (6) aus zwei Verschlussdeckelteilen (6', 6") besteht, die relativ zueinander zwischen einer geschlossenen Position, in welcher sich die beiden Verschlussdeckelteile (6', 6") berühren und zusammen den Verschlussdeckel (6) bilden, und einer geöffneten Position, in welcher die beiden Verschlussdeckelteile (6', 6") voneinander beabstandet sind, so dass zwischen den beiden Verschlussdeckelteilen (6', 6") eine Öffnung zur Entnahme des Mischgutes aus dem Behälter gebildet wird, um eine Schwenkachse (9) hin und her verschwenkt werden können, um sie zwischen der geschlossenen Position und der geöffneten Position hin und her zu bewegen, wobei beide Verschlussdeckelteile (6', 6") um dieselbe Schwenkachse (9) verschwenkbar sind, wobei der eine Verschlussdeckelteil (6', 6") mit der Vorrichtung zur Umsetzung einer Linearbewegung in eine Drehbewegung verbunden ist und der andere Verschlussdeckelteil (6', 6") mit der weiteren Vorrichtung zur Umsetzung einer Linearbewegung eine Drehbewegung verbunden ist.

8. Mischvorrichtung nach Anspruch 6 oder 7, **dadurch gekennzeichnet, dass** die Entleeröffnung (5) und das Verschlusselement (6) zueinander korrespondierende Kantenflächen aufweisen, die miteinander in Kontakt treten, wenn das Verschlusselement (6) in der EntleerÖffnung (5) positioniert ist, wobei vorzugsweise die Kantenflächen des Verschlusselementes (6) derart gekrümmt ausgebildet sind, dass sie auf einer gedachten Kugel liegen, und der Mittelpunkt der gedachten Kugel auf der Schwenkachse (9) liegt.

9. Mischvorrichtung nach einem der Ansprüche 6 bis 8, **dadurch gekennzeichnet, dass** das Verschlusselement (6) mit dem Boden (7) bündig abschließt, so dass sich eine ebene Bodenfläche ergibt, wenn das Verschlusselement (6) in der Entleeröffnung (5) positioniert ist.

## Claims

1. A device for converting a linear movement in a stationary system into a rotary movement about a pivot axis (9) in a system which rotates about an axis of rotation (8), wherein the pivot axis (9) and the axis of rotation (8) are not identical and do not extend parallel to each other, wherein preferably the pivot axis (9) and the axis of rotation (8) extend perpendicularly to each other, comprising a lift element, a lift device (13) with which the lift element can be moved with a translatory movement relative to the stationary system, and a device for converting a linear movement into a rotary movement, wherein the lift element has a first lift element portion (14) and a second lift element portion (15), wherein the two lift element portions (14, 15) are connected together by way of a rotary bearing (16) in such a way that the first lift element portion (14) can be rotated relative to the second lift element portion (15) about the axis of the rotary bearing (16), wherein the two portions of the lift element are connected together in positively locking relationship in the direction of the translatory movement of the lift device (13), wherein the first lift element portion (14) is connected to the lift device (13) and the second lift element portion (15) is connected to the device for converting a linear movement into a rotary movement, wherein the device for converting a linear movement into a rotary movement is connected to a shaft (19) positioned on the pivot axis (9) in such a way that a linear movement of the second lift element portion (15) is converted into a rotary movement of the shaft about the pivot axis, **characterised in that** the device for converting a linear movement into a rotary movement has a cam plate (17) connected to the second lift element portion (15) and a lever (18) which is in contact with the cam plate (17) and which is connected to the shaft (3).

2. A conversion device according to claim 1 **characterised in that** the lift device (13) has at least one and preferably at least four lift pistons which connects the stationary system to the first lift element portion (14) and can linearly move the first lift element portion (14) relative to the stationary system.

3. A conversion device according to claim 1 or claim 2 **characterised in that** the first and/or the second lift element portion is of an annular configuration.

4. A conversion device according to one of claims 1 to 3 **characterised in that** there is provided a further device for converting a linear movement into a rotary movement, that is connected to the second lift element portion (15) and a second shaft arranged on the pivot axis (9).

5. A conversion device according to claim 4 **characterised in that** the two devices for converting a linear movement into a rotary movement are of such a configuration that the two shafts arranged on the pivot axis (9) are moved in mutually opposite relationship.

6. A mixing device having a container for receiving mixing material, which is rotatable about a container axis and in the bottom (7) of which is arranged an emptying opening (5), a closure cover (6) for closing the emptying opening (5) and a mixer foot, the container being rotatable relative to the mixer foot, **characterised in that** there is provided a conversion device according to one of claims 1 to 5, in which the mixer foot is part of the stationary system and the container is part of the rotating system, wherein the closure cover (6) can be rotated about a pivot axis (9) for opening and closing the emptying opening (5).

7. A mixing device according to claim 6 **characterised in that** there is provided a conversion device according to claim 4 and claim 5, the closure cover (6) comprises two closure cover portions (6', 6") which can be reciprocatingly pivoted about a pivot axis (9) relative to each other between a closed position in which the two closure cover portions (6', 6") are in contact and together form the closure cover (6) and an opened position in which the two closure cover portions (6', 6") are spaced from each other so that an opening for removing the mixing material from the container is formed between the two closure cover portions (6', 6") in order to reciprocate them between the closed position and the opened position, wherein both closure cover portions (6', 6") are pivotable about the same pivot axis (9), wherein the one closure cover portion (6', 6") is connected to the device for converting a linear movement into a rotary movement and the other closure cover portion (6', 6") is connected to the further device for converting a linear movement into a rotary movement.

8. A mixing device according to claim 6 or claim 7 **characterised in that** the emptying opening (5) and the closure element (6) have mutually corresponding edge surfaces which come into contact with each other when the closure element (6) is positioned in the emptying opening (5), wherein preferably the edge surfaces of the closure element (6) are of a curved configuration such that they lie on a notional sphere and the centre point of the notional sphere lies on the pivot axis (9).

9. A mixing device according to one of claims 6 to 8 **characterised in that** the closure element (6) terminates flush with the bottom (7) so that a flat bottom surface is afforded when the closure element (6) is positioned in the emptying opening (5).

## Revendications

1. Dispositif servant à transformer un déplacement linéaire dans un système stationnaire en un déplacement de rotation autour d'un axe de pivotement (9) dans un système tournant autour d'un axe de rotation (8), l'axe de pivotement (9) et l'axe de rotation (8) n'étant pas identiques et ne s'étendant pas parallèlement l'un à l'autre, l'axe de pivotement (9) et l'axe de rotation (8) s'étendant de préférence perpendiculairement l'un à l'autre, avec un élément de levage, un dispositif de levage (13) à l'aide duquel l'élément de levage peut être déplacé par un mouvement de translation par rapport au système stationnaire, et un dispositif pour transformer un déplacement linéaire en un déplacement de rotation, l'élément de levage comprenant une première partie d'élément de levage (14) et une deuxième partie d'élément de levage (15), les deux parties d'élément de levage (14, 15) étant reliées l'une à l'autre par un palier rotatif (16) de façon telle que la première partie d'élément de levage (14) puisse être tournée par rapport à la deuxième partie d'élément de levage (15) autour de l'axe du palier rotatif (16), les deux parties de l'élément de levage étant attachées l'une à l'autre par complémentarité de forme dans la direction du déplacement par mouvement de translation du dispositif de levage (13), la première partie d'élément de levage (14) étant attachée au dispositif de levage (13) et la deuxième partie d'élément de levage (15) étant attachée au dispositif pour transformer un déplacement linéaire en un déplacement de rotation, le dispositif pour transformer un déplacement linéaire en un déplacement de rotation étant attaché à un arbre (19) situé sur l'axe de pivotement (9) de façon telle qu'un déplacement linéaire de la deuxième partie d'élément de levage (15) soit transformé en un déplacement de rotation de l'arbre autour de l'axe de pivotement (9), **caractérisé en ce que** le dispositif pour transformer un déplacement linéaire en un déplacement de rotation comprend un disque à came (17) attaché à la deuxième partie d'élément de levage (15) et un levier (18) attaché à l'arbre (3) et étant en contact avec le disque à came (17).

2. Dispositif de transformation selon la revendication 1, **caractérisé en ce que** le dispositif de levage (13) comprend au moins un, de préférence au moins quatre, piston de levage qui relie le système stationnaire à la première partie d'élément de levage (14) et peut déplacer linéairement la première partie d'élément de levage (14) par rapport au système stationnaire.

3. Dispositif de transformation selon la revendication 1 ou 2, **caractérisé en ce que** la première et/ou la deuxième partie d'élément de levage est formé en forme d'anneau.

4. Dispositif de transformation selon l'une des revendications 1 à 3, **caractérisé en ce qu'**il est prévu un autre dispositif pour transformer un déplacement linéaire en un déplacement de rotation, dispositif qui est relié à la deuxième partie d'élément de levage (15) et à un deuxième arbre disposé sur l'axe de pivotement (9).

5. Dispositif de transformation selon la revendication 4, **caractérisé en ce que** les deux dispositifs pour transformer un déplacement linéaire en un déplacement de rotation sont formés de manière telle que les deux arbres disposés sur l'axe de pivotement (9) sont déplacés en sens opposé l'un par rapport à l'autre.

6. Dispositif mélangeur comprenant un récipient rotatif autour d'un axe de récipient et destiné à recevoir de la matière à mélanger, dans le fond (7) duquel est disposée une ouverture de vidage (5), et un couvercle (6) pour fermer l'ouverture de vidage et un pied de mélangeur, le récipient étant rotatif par rapport au pied de mélangeur, **caractérisé en ce qu'**il est prévu un dispositif de transformation selon l'une quelconque des revendications 1 à 5, dont le pied de mélangeur est une partie du système stationnaire et dont le récipient est une partie du système rotatif, le couvercle (6) pouvant être tourné autour d'un axe de pivotement (9) pour ouvrir et fermer l'ouverture de vidage (5).

7. Dispositif mélangeur selon la revendications 6, **caractérisé en ce qu'**il est prévu un dispositif de transformation selon les revendications 4 et 5, que le couvercle (6) est constitué de deux parties de couvercle (6', 6") qui peuvent être pivotées, l'une par rapport à l'autre, dans un mouvement de va-et-vient autour d'un axe de pivotement (9), entre une position fermée dans laquelle les deux parties de couvercle (6', 6") sont en contact et forment ensemble le couvercle (6), et une position ouverte dans laquelle les deux parties de couvercle (6', 6") sont éloignées l'une de l'autre si bien qu'il se forme une ouverture entre les deux parties de couvercle (6', 6") pour le prélèvement du récipient, de la matière à mélanger, afin de les déplacer dans un mouvement de va-et-vient entre la position fermée et la position ouverte, les deux parties de couvercle (6', 6") pouvant être pivotées autour du même axe de pivotement (9), l'une des parties de couvercle (6', 6") étant reliée au dispositif pour transformer un déplacement linéaire en un déplacement de rotation et l'autre partie de couvercle (6', 6") étant reliée à l'autre dispositif pour transformer un déplacement linéaire en un déplacement de rotation.

8. Dispositif mélangeur selon la revendication 6 ou 7, **caractérisé en ce que** l'élément de vidage (5) et le couvercle (6) comprennent des surfaces d'arête correspondant les unes aux autres qui rentrent en contact lorsque le couvercle (6) est positionné dans l'élément de vidage, les surfaces d'arête du couvercle étant courbées de manière telle qu'elles soient positionnées sur une sphère imaginaire, et que le centre de la sphère imaginaire soit situé sur l'axe de pivotement (9).

9. Dispositif mélangeur selon l'une des revendications 6 à 8, **caractérisé en ce que** le couvercle (6) est à fleur avec le fond (7) si bien qu'il en résulte un fond plat lorsque le couvercle (6) est positionné dans l'ouverture de vidage (5).
